# EUROPEAN PATENT SPECIFICATION

(11) **EP 3 672 421 B1**
(45) Date of publication and mention of the grant of the patent: **28.10.2020**
(21) Application number: 18755831.7
(22) Date of filing: 23.08.2018
(51) Int. Cl.: A23K 20/142, A23K 50/75

(54) **REDUCTION OF GASTROINTESTINAL TRACT COLONISATION BY CAMPYLOBACTER**
REDUKTION DER KOLONISIERUNG DES MAGEN-DARM-TRAKTS DURCH CAMPYLOBACTER
RÉDUCTION DE LA COLONISATION DU TRACTUS GASTRO-INTESTINAL PAR CAMPYLOBACTER

(30) Priority: 24.08.2017 EP 17187659
(43) Date of publication of application: 01.07.2020
(73) Proprietor: Evonik Operations GmbH, 45128 Essen (DE)
(72) Inventor: HELMBRECHT, Ariane, 63165 Mühlheim (DE); VISSCHER, Christian, 30559 Hannover (DE); KLINGENBERG, Linus, 46325 Borken (DE)
(74) Representative: Evonik Patent Association
(86) International application number: PCT/EP2018/072711
(87) International publication number: WO 2019/038351

(56) References cited:
- WO-A1-00/30469
- WO-A1-2013/121214
- US-B1- 6 627 188
- J. VELAYUDHAN ET AL: "L-Serine Catabolism via an Oxygen-Labile L-Serine Dehydratase Is Essential for Colonization of the Avian Gut by Campylobacter jejuni", INFECTION AND IMMUNITY, vol. 72, no. 1, 1 January 2004 (2004-01-01), pages 260-268, XP055421861, ISSN: 0019-9567, DOI: 10.1128/IAI.72.1.260-268.2004
- AWAD WAGEHA A ET AL: "Increased intracellular calcium level and impaired nutrient absorption are important pathogenicity traits in the chicken intestinal epithelium duringCampylobacter jejunicolonization", APPLIED MICROBIOLOGY AND BIOTECHNOLOGY, SPRINGER, DE, vol. 99, no. 15, 1 April 2015 (2015-04-01) , pages 6431-6441, XP035509962, ISSN: 0175-7598, DOI: 10.1007/S00253-015-6543-Z [retrieved on 2015-04-01]

## Description

The present invention relates to a low-crude protein diet and its use for the prophylaxis and/or treatment of campylobacteriosis.

Worldwide there is a growing demand for products made of poultry, which also leads to an increasing production and accordingly increasing numbers of animals. In addition to the demands for an efficient and economically favorable production of poultry meat products, there are also high demands on the quality of poultry meat products. A major aspect in the production of poultry meat products is the absence of pathogens, which are a potential risk for the consumer. Such a risk comes from those pathogens naturally being found in animals, which can be transmitted to humans. The natural transmission of infectious diseases from animals to humans is also referred to as zoonosis. One of the major foodborne pathogens is Campylobacter, a gram negative, spiral rod shaped bacteria with a single flagellum at one or both poles. They belong to the epsilon subdivision of the class proteobacteria and are closely related to Helicobacter. Although these species are related they have very different culture requirements and different hosts. Campylobacter species usually live in the gut of animals, in particular chicken while Helicobacter lives in the stomach of humans. Campylobacter causes the so-called campylobacteriosis, a major bacterial zoonosis, which can be transmitted to humans when consuming poultry meat products. This disease, often accompanied by watery, partially bloody diarrhea, crampy stomach pain and fever in humans, can also lead to a chronic disorder of the peripheral nervous system. Campylobacter is considered the leading cause of bacteria-derived gastroenteritis not only in the European Union but also worldwide: Within the European Union the number of diseases caused by infections with Campylobacter has exceeded the number of diseases caused by infections with Salmonella (bowel diseases per pathogen in the European Union in 2011: 200,209 by Campylobacter, and 95,548 by salmonella; EFSA, 2013). In the year 2015 campylobacteriosis was the most common diarrhea being registered in Germany by the Robert-Koch-Institute, with increasing tendency, with *Campylobacter* (*C*.) *jejuni* having a dominant importance among the campylobacterioses, which are associated with poultry meat products. Worldwide, campylobacteriosis is considered one of the most important zoonotic diseases. The reasons for this are the high prevalence of C. *jejuni* infections in poultry stocks and the associated high risk of a contamination of the carcasses at slaughter. Therefore, it is to be expected that there will be stricter regulations on Campylobacter infected poultry meat products in the (near) future. If it was possible to draw conclusions on the producer of the infected poultry, this could lead to the temporary closure of the respective farm and in the worst case possibly even to a culling of the flock.

In the past, severe or prolonged cases of campylobacteriosis have been treated with antibiotics. However, the overuse of these antibiotics has led to the emergence of antibiotic-resistant strains. As a consequence of this, consumers are more and more interested in poultry meat products, which were produced without the use of antibiotics. Hence, there is an urgent need for novel strategies and products for the treatment and prophylaxis of Campylobacter infections in poultry.

Several strategies have been developed and tested for the reduction of the prevalence of Campylobacter in poultry and poultry meat products. The published international patent application WO 2013/121214 A1 follows the strategy to block the interaction of the major outer membrane protein (MOMP) or the flagellin (flaA) gene on the surface of Campylobacter with the cells of the gastrointestinal tract. For this purpose the document discloses compounds that bind to MOMP or flaA and competitively or non-competitively inhibit the binding of MOMP or flaA on the Campylobacter with the cells of the gastrointestinal tract. Specifically, the document teaches the use of a natural human histo-blood group antigen or a synthetic human histo-blood group antigen to inhibit the binding of MOMP or flaA on the Campylobacter with the cells of the gastrointestinal tract. A major drawback of this strategy is that it is only a response to an already existing infection of poultry with Campylobacter. However, the prevalence of Campylobacter in a flock of poultry is not visible or identifiable by the outer appearance of the poultry but rather only when the poultry which is infected with Campylobacter is slaughtered. Once the Campylobacter has been identified in the carcasses of poultry, it is however too late to for the reduction of the prevalence of Campylobacter in the poultry flock because pathogens are very quickly distributed from an infected animal to other animals. Accordingly, a complete poultry flock is infected with Campylobacter within a short period. A further drawback of the strategy of the WO 2013/121214 A1 is that the antigens taught therein are not registered for use in poultry and in particularly not as feed additive for poultry. As a consequence, the compounds of the WO 2013/121214 A1 are not suitable at all for the reduction and in particular not for the prophylaxis of campylobacteriosis in poultry.

Another strategy to reduce the colonization of Campylobacter in poultry is the application of substances, which are believed to have an antimicrobial effect on Campylobacter. In particular, organic acids were tested as feed additives in the drinking water or in the feed of poultry because of the high in vitro sensitivity of Campylobacter to low pH values of ca. 2.5 or 3. However, the positive effect of different organic acids on Campylobacter in vitro could not be successfully transferred to an animal model. Accordingly, there is still a need for a strategy to reduce the colonization with Campylobacter without effecting the health of the animals and without effecting the quality of the poultry meat.

The above strategies of the prior art focused on attacking Campylobacter directly. A different potential target is the basis of living for Campylobacter. The article "Changes with growth rate in the membrane lipid composition of and amino acid utilization by continuous cultures of Campylobacter jejuni" (S. Leach, P. Harvey, and R. Wait, Journal of Applied Microbiology 1997, vol. 82, pages 631-640) discloses that campylobacter jejuni grows at the expense of amino acids in vitro. The study by Leach et al. has further shown that campylobacter jejuni utilizes serine, aspartate, glutamate, and proline, with L-serine being preferentially utilized compared to other amino acids. Further studies have shown that amino acid transporters and especially serine catabolism are required for campylobacter colonization of the intestinal tract (see articles "L-serine catabolism via an oxygen-labile L-serine dehydratase is essential for colonization of the Avian Gut by Campylobacter jejuni", J. Velayudhan, M. A. Jones, P. A. Barrow and D. J. Kelly, Infection and Immunity, 2004, vol. 72, no. 1, pages 260-268 and "Increased intracellular calcium level and impaired nutrient absorption are important pathogenicity traits in the chicken intestinal epithelium during campylobacter jejuni colonization", W. A. Awad, A. Smorodchenko, C. Hess, J. A. Aschenbach, A. Molnár, K. Dublecz, B. Khayal, E. E. Pohl, M. Hess, Applied Microbial and Cell Physiology, 2015, vol. 99, pages 6431-6441). However, the studies of these articles are rather sophisticated and do not provide any workable tool for the reduction and/or prophylaxis of the colonization of the gastrointestinal tract of poultry by campylobacter. In particular, these studies do not provide a farmer with a medical composition or a diet, which would be suitable for the reduction and/or prophylaxis of the colonization of the gastrointestinal tract of poultry by campylobacter.

It was found that a diet with a reduced content of all of the non-essential amino acids aspartic acid, glutamic acid, proline, serine and/or salts thereof, and a reduced content of crude protein, compared to a standard diet for poultry, is suitable for reduction and/or prophylaxis of the colonization of the gastrointestinal tract of poultry by Campylobacter. Specifically, a diet, which comprises from 60 to less than 90 g of all the amino acids aspartic acid, glutamic acid, proline, serine and/or salts thereof per kg dry matter of the diet, and from 160 g +/- 10% to 190 g +/- 10% crude protein per kg dry matter of the diet leads to a reduction of the colonization of the gastrointestinal tract by Campylobacter. This effect can be achieved in any kind of poultry, which was infected by Campylobacter. In addition, the diet according to the present invention also contains at least 5 g of methionine, 2-hydroxy-(4-methylthio)butanoic acid and/or a salt thereof, per kg dry matter of the diet in order to provide for an appropriate growth of poultry. By comparison, a standard diet for poultry according to the needs recommendations of the Germany society for nutrition physiology typically comprises at least 90 g of the non-essential amino acids, i.e. aspartic acid, glutamic acid, proline, serine and/or salts thereof per kg dry matter of the diet and at least 212 g crude protein per kg dry matter of the diet (GFE 1999). Also, breeders recommendations for the chicken races Ross 308 and Cobb 500, which are the most common in feeding stalls, advices the presence of from 136 to 159 g of the non-essential amino acids aspartic acid, glutamic acid, proline, and serine per kg dry matter of the diet, depending on the growth stages of the chicken (cf. Ross 308 Broiler: Nutrition Specifications, Aviagen 2014, and Cobb500: Broiler Performance & Nutrition Supplement, Cobb-Vantress 2013).

One object of the present invention is therefore a diet for feeding poultry comprising from 60 to less than 90 g of all of the amino acids aspartic acid, glutamic acid, proline, serine and/or salts thereof per kg dry matter of the diet, at least 5 g of methionine, 2-hydroxy-(4-methylthio)butanoic acid and/or a salt thereof, per kg dry matter of the diet, and from 160 g +/- 10% to 190 g +/- 10% crude protein per kg dry matter of the diet.

Without wishing to be bound to a specific theory it is believed that the effect of the diet can be explained by the metabolism of Campylobacter which is believed to mainly utilize the amino acids aspartic acid, glutamic acid, proline, and serine, which are believed to be preferred in this order. Apart from the specific amounts of these particular amino acids, the diet also comprises the typical main components of a diet for animals, such as wheat, corn, soybean meal, soybean oil, and/or any other sources of crude protein, amino acids, fat and carbohydrates. In addition, the diet also comprises sources of calcium, phosphorous, potassium, sodium, chloride, and magnesium, wherein a source may simultaneously contain not only one of the aforementioned elements but also two or more.

In the context of the present invention the term dry matter, hereinafter also abbreviated as DM, is used to denote the moisture-free content of a diet. The dry matter (DM) content of a diet is determined by weighing a sample of the diet before and after complete drying. For example, if the sample of a diet weighs 100 gram before drying and 40 gram after drying, it contains 40% dry matter.

In the context of the present invention an explicitly mentioned amino acid, a derivative of an amino acid and/or a salt thereof encompasses its D-isomer, its L-isomer and the racemic mixture; for example the term methionine encompasses L-methionine, D-methionine, and D,L-methionine.

Suitable salts of amino acids in the context of the present invention are in particular those compounds, which essentially lead to the same effects as the amino acids without negatively affecting the metabolism of the animal. In particular, those amino acid salts differ in their molecular weight only slightly from the corresponding amino acids. Examples of those salts are the alkali salts, such as the sodium or potassium salts, of amino acids, or the alkaline earth salts, such as calcium or magnesium salts, of amino acids or ammonium salts of the amino acids. As far as amino acid salts are concerned, the explicitly mentioned values of the weight portions of amino acids in the diet according to the present invention may vary, i.e. may be higher than the mentioned values, because of the heavier molecular weight of an amino acid salt compared to a neutral amino acid.

The derivative of methionine is 2-hydroxy-(4-methylthio)butanoic acid, also known as methionine-hydroxy-analogue (simply abbreviated as MHA) or 2-[(2-amino-4-methylsulfanylbutanoyl)amino]-4-methylsulfanylbutanoic acid, also known as methionyl-methionine (simply abbreviated as met-met). In the context of the present invention the derivative of methionine, and/or salt thereof encompasses all of its isomers or diastereomers; for example its D-isomer, its L-isomer and the racemic mixture; L-MHA, D-MHA, and D,L-MHA; L-met-L-met, L-met-D-met, D-met-L-met and D-met-D-met.

One could speculate that reducing the concentration of amino acids in a diet would potentially have a negative effect on the growing performance of poultry during rearing. However, it was found that negative effects on the body weight gain of poultry can be avoided when the concentration of the amino acids aspartic acid, glutamic acid, proline, serine and/or salts thereof does not fall below 60 g per kg dry matter of the diet.

According to the invention, the diet according to the present invention therefore comprises from 60 to less than 90 g per kg dry matter of all of the amino acids aspartic acid, glutamic acid, proline, serine and/or salts thereof.

Preferably, the diet according to the present invention comprises from 60 to 89 g of all of the amino acids aspartic acid, glutamic acid, proline, serine and/or salts thereof per kg dry matter of the diet. In one embodiment, the diet according to the present invention comprises from 67 +/- 10% to 80 +/-10% g of all of the amino acids aspartic acid, glutamic acid, proline, serine and/or salts thereof per kg dry matter of the diet.

The lower is the content of all of the amino acids aspartic acid, glutamic acid, proline, serine and/or salts thereof per kg dry matter of the diet, the slower is the growth of the poultry to which the diet is given. A diet with a rather low content of all of the amino acids aspartic acid, glutamic acid, proline, serine and/or salts thereof is therefore particularly suitable for the increasing number of feeding concepts which are based on a slow growth of poultry; for example when chicken are reared over a period which is longer than the common period of 42 days.

However, when preference is given to an un-delayed poultry growth, the diet according to the present invention preferably comprises from 65 to 85 g or from 70 to 80 g of all of the amino acids aspartic acid, glutamic acid, proline, serine and/or salts thereof per kg dry matter of the diet.

In the context of the present invention the term +/- 10 % with respect to indication of weight is used to denote all weight values from 10 % below the explicitly mentioned values to 10% above the explicitly mentioned value, wherein said indicated values of weight include all values which can be expressed by integral and real numbers. The term +/- 10 % with respect to indications of weight also indicates that slight deviations of the explicitly mentioned values, which however, still lead to the essentially the same effect as the present invention, are also encompassed by the present invention.

Reducing the concentration of all of the amino acids aspartic acid, glutamic acid, proline, serine and/or salts to a value below 90 g per kg dry matter of the diet already leads to a reduction of the prevalence of Campylobacter in poultry. Accordingly, in order to guarantee that the living basis for Campylobacter is efficiently withdrawn, it is even better that all of the amino acids, which are mainly utilized by the metabolism of Campylobacter, are deficient.

Therefore, the diet according to the present invention comprises from 60 to less than 90 g of all of the amino acids aspartic acid, glutamic acid, proline, serine and/or salts thereof per kg dry matter of the diet. In particular, the diet according to the present invention comprises from 67 +/- 10% to 80 +/-10% g, from 65 to 85 g or from 70 to 80 g of all of the amino acids aspartic acid, glutamic acid, proline, serine and/or salts thereof per kg dry matter of the diet.

Experiments have shown that a diet with 20 g at the most of aspartic acid, 45 g at the most of glutamic acid, 13 g at the most of proline, 11 g at the most of serine, and/or salts thereof, per kg dry matter of the diet gives the most efficient reduction of the gastrointestinal colonization by Campylobacter.

In another embodiment the diet according to the present invention, therefore, comprises 20 g at the most of aspartic acid, 45 g at the most of glutamic acid, 13 g at the most of proline, 11 g at the most of serine, and/or salts thereof, per kg dry matter of the diet.

It was further found that a diet which comprises from 10 to 20 g of aspartic acid, from 30 to 45 g of glutamic acid, from 5 to 13 g of proline, from 3 to 11 g of serine, and/or salts thereof, per kg dry matter of the diet does not only lead to an efficient reduction of the gastrointestinal colonization by Campylobacter but in addition it also does not negatively affect the body weight gain of poultry.

In a further embodiment the diet according to the present invention comprises from 10 to 20 g of aspartic acid, from 30 to 45 g of glutamic acid, from 5 to 13 g of proline, from 3 to 11 g of serine, and/or salts thereof, per kg dry matter of the diet.

Preferably, the diet according to the present invention comprises from 16 g +/- 10% to 18 g +/- 10% of aspartic acid, from 37 g +/- 10% to 40 g +/- 10% of glutamic acid, from 8 g +/- 10% to 11 g +/- 10% of proline, from 8 g +/- 10% to 10 g +/- 10% of serine, and/or salts thereof, per kg dry matter of the diet or from 15 to 19 g of aspartic acid, from 34 to 44 g of glutamic acid, from 8 to 12 g of proline, from 8 to 10 g of serine, and/or salts thereof, per kg dry matter of the diet.

It was also found that a reduction of the crude protein content in a diet for poultry decreases the build-up of the mucus layer, which is believed to be the host for Campylobacter in the gastrointestinal tract of poultry. Specifically, it was found that a reduction in the concentration of the crude protein content below the at least 212 g per kg dry matter in a standard diet for poultry, leads to a decrease in the build-up of the mucus layer. Without wishing to be bound to a specific theory, it is believed that the synthesis of mucins, which make up the main constituent of the intestinal mucus layer, depends on the supply with crude protein in a diet. It is further believed that a reduced crude protein content in a diet leads to a reduced production and release of mucins into the gastrointestinal tract of poultry. As a consequence of the reduced supply of the maintaining crude protein, there is an increase of mucins excretion from the gastrointestinal tract. The withdrawal of the host for the Campylobacter is therefore believed to lead to a further improved reduction in the colonization of the gastrointestinal tract by Campylobacter.

In the context of the present invention the term crude protein is used to denote all protein compounds. The term crude protein therefore also comprises all essential and non-essential amino acids present in the diet. Accordingly, the upper limit of the content of, for example, all of the non-essential amino acids aspartic acid, glutamic acid, proline, and serine as well as the content of the other amino acids, i.e. essential amino acids such as methionine in the diet is given by the upper limit of the content of crude protein in the diet. In contrast to fats, carbohydrates and dietary fibers, proteins are the only major components of feed which contain nitrogen. The classic assays for protein concentration in feed are the Kjeldahl and the Dumas method. These tests determine the total nitrogen in a sample. If the thus obtained amount of nitrogen is multiplied by a factor depending on the kinds of proteins to be expected in the feed, the total protein can be determined. This value is also referred to as the "crude protein content". Since the average nitrogen content of protein is about 16%, the "crude protein content" is usually given by the total nitrogen in the sample multiplied by 6.25. The Kjeldahl test is typically used because it is the method the Association of Official Analytical Chemists (AOAC International) has adopted and is therefore used by many feed standard agencies around the world, though the Dumas method is also approved by some standard organizations.

The diet according to the present invention comprises 190 g +/- 10% at the most of crude protein per kg dry matter of the diet. Experiments have proven that a diet with this crude protein content is particularly suitable for reducing the gastrointestinal colonization by Campylobacter. Any decrease in the crude protein content of a diet can negatively affect the body weight gain of poultry. However, it was found that this potential problem is eliminated when the diet according to the present invention has a minimum content of 160 g +/- 10 % of crude protein per kg dry matter in the diet.

The diet according to the present invention therefore comprises from 160 g +/- 10 % to 190 g +/- 10 % crude protein per kg dry matter of the diet.

Preferably, the diet according to the present invention comprises from 170 g +/- 10 % to 190 g +/- 10 % crude protein per kg dry matter of the diet.

In the easiest way, a reduction of crude protein content in the diet according to the present invention can be achieved in that said diet has a lower content of soybean meal or rapeseed meal, which are typical main sources of crude protein in diets in general.

A sufficient crude protein content in a diet is one of the major requirements for the appropriate supply of nutrients, in particular in order to ensure an acceptable body weight gain of poultry. Hence, a general reduction of the crude protein content in a diet can potentially have a negative effect on the body weight gain of poultry. However, by specifically targeting the growth-limiting amino acid for poultry in the diet according to the present invention, it is possible to reduce the crude protein content without negatively affecting the body weight gain of poultry. It was found that the presence of 5 g of methionine and/or salts thereof, per kg dry matter of the diet, in the diet according to the present invention are already suitable to compensate for the reduced crude protein content in the diet. This effect is believed to be based on the fact that methionine is the most relevant of those amino acids, which are considered to be essential for poultry. The presence of 5 g of each of the amino acids, which are considered to be essential for poultry, and/or salts thereof in the diet according to the present invention is suitable to provide for an overall acceptable body weight gain of poultry in any case. These amino acids are arginine, isoleucine, lysine, methionine, threonine, and valine.

The diet according to the present invention comprises at least 5 g of methionine, 2-hydroxy-(4-methylthio)butanoic acid and/or a salt thereof, per kg dry matter of the diet.

In another embodiment the diet according to the present invention comprises at least 5 g of each of the amino acids arginine, isoleucine, lysine, threonine, valine, and/or salts thereof, per kg dry matter of the diet.

In yet another embodiment, the diet according to the present invention comprises at least 13 g arginine, at least 8 g isoleucine, at least 12 g lysine, at least 5 g methionine, at least 8 g threonine, at least 9 g valine, and/or salts thereof, per kg dry matter of the diet.

The determination of amino acids in the diets can be done by ion-exchange chromatography (AA analyzer LC 3000, Biotronic, Maintal, Germany), and the evaluation of the results can be done in accordance with established methods (Vervuert et al., 2005). However, typically, the nitrogen concentration is first determined in basic raw materials of the diet, such as wheat, corn, soybean meal, soybean oil and optional premixes, and based on this results the specific amounts of the individual amino acids are added in order to yield a diet according to the present invention with a specific amino acid pattern and optionally, a specific crude protein content.

A typical procedure for the determination of the amino acids is as follows: First, a sample of the diet or raw material for the diet is subjected to a hydrolysis treatment, preferably an acidic or a basic hydrolysis, using for example hydrochloric acid or barium hydroxide. The reason for this treatment is that to a certain degree amino acids are not only present as single compounds but also as oligopeptides, e.g. dipeptides, tripeptide or higher peptides, formed in an equilibrium reaction from two, three or even more amino acids. The amino group of an amino acid is usually too weak as a nucleophile to react directly with the carboxyl group of another amino acid or it is present in protonated form (-NH₃⁺). Therefore, the equilibrium of this reaction is usually on the left side under standard conditions. Nevertheless, depending on the individual amino acids and the condition of a sample solution some of the amino acid to be determined may be not present as single compound but to a certain degree as oligopeptides, e.g. dipeptide, tripeptide or higher peptide, formed of two, three or even more amino acids. The acidic or basic hydrolysis gives the individual free amino acids. In order to facilitate the separation of the free amino acids and/or the identification and determination of the amino acids, the free amino acids are derivatized with a chromogenic reagent, if necessary. Suitable chromogenic reagents are known to the person skilled in the art. Subsequently, the free amino acids or the derivatized free amino acids are subjected to a chromatographic separation, in which the different amino acids are separated from each other because of the different retention times due to the different functional groups of the individual amino acids. Suitable chromatography columns, for example reversed phase columns (ion exchange chromatography), and suitable eluent solvents for the chromatographic separation of amino acids are known to the person skilled in the art. The separated amino acids are finally determined in the eluates from the chromatography step by comparison with a calibrated standard, prepared prior to the analysis. Typically, the amino acids, which are eluted from the chromatography column, are detected with a suitable detector, for example with a conductivity detector, a mass-specific detector or a fluorescence detector or a UV/VIS-detector depending when the amino acids were derivatized with a chromogenic reagent. This gives a chromatogram with peak areas and peak heights for the individual amino acids. The determination of the individual amino acids is performed by comparing the peak areas and peak heights with a calibrated standard or calibration curve for each amino acid.

The diet according to the present invention is suitable for the reduction of the colonization of the gastrointestinal tract of poultry by Campylobacter.

There is also disclosed a method for reducing the colonization of the gastrointestinal tract of poultry by Campylobacter in poultry, comprising the step of feeding a diet according to the present invention to poultry.

The term Campylobacter is used in the context of the present invention to denote any kind of species belonging to the genus Campylobacter. The term Campylobacter therefore includes the species *Campylobacter concisus, Campylobacter curvus, Campylobacter fetus, Campylobacter hominis,* and *Campylobacter (C.) jejuni.* Besides salmonella, *C*. *jejuni* is the most relevant diarrhoeal pathogen. Therefore, preference is given to this particular species.

In the context of the present invention the term poultry is used to denote any kind of domesticated birds kept by humans for their eggs, their meat or their feathers. These birds are most typically members of the superorder Galloanserae (fowl), especially the order Galliformes, which includes chickens, quails and turkey, and the order Anseriformes, which includes ducks, geese and swans. The most relevant poultry worldwide is chicken or broiler. Therefore, the poultry to which the diet is fed in the method according to the present invention is preferably chicken or broiler.

Campylobacter, and in particular *C*. *jejuni,* is the pathogen of campylobacteriosis, in particular in poultry. The diet according to the present invention is suitable for the reduction of the colonization of the gastrointestinal tract by Campylobacter. Thus, said diet is also suitable for the prophylaxis and/or treatment of campylobacteriosis, in particular in poultry.

A further object of the present invention is therefore a diet for use in the prophylaxis and/or treatment of campylobacteriosis in poultry, wherein the diet comprises from 60 to less than 90 g of all of the amino acids aspartic acid, glutamic acid, proline, serine, and/or salts thereof per kg dry matter of the diet, at least 5 g of methionine, 2-hydroxy-(4-methylthio)butanoic acid and/or a salt thereof per kg dry matter of the diet, and from 160 g +/- 10% to 190 g +/- 10% crude protein per kg dry matter of the diet.

Apart from the specific amounts of these amino acids, the diet also comprises the typical main components of a diet for animals, such as wheat, corn, soybean meal, soybean oil, and/or any other sources of crude protein, amino acids, fat and carbohydrates. In addition, the diet also comprises sources of calcium, phosphorous, potassium, sodium, chloride and magnesium, wherein a source may simultaneously contain not only one of the aforementioned elements but also two or more.

The diet for use in the prophylaxis and/or treatment of campylobacteriosis in poultry comprises from 60 to less than 90 g of all of the amino acids aspartic acid, glutamic acid, proline, serine, and/or salts thereof per kg dry matter of the diet. In one embodiment, the diet for the prophylaxis and/or treatment of campylobacteriosis in poultry comprises from 67 +/- 10% to 80 +/- 10% g, preferably from 65 to 85 g, or from 70 to 80 g of all of the amino acids aspartic acid, glutamic acid, proline, serine, and/or salts thereof per kg dry matter of the diet.

In another embodiment the diet for use in the prophylaxis and/or treatment of campylobacteriosis in poultry comprises 20 g at the most of aspartic acid, 45 g at the most of glutamic acid, 13 g at the most or proline, 11 g at the most of serine, and/or salts thereof, per kg dry matter of the diet.

In a further embodiment the diet for use in the prophylaxis and/or treatment of campylobacteriosis in poultry comprises from 10 to 20 g of aspartic acid, from 30 to 45 g of glutamic acid, from 5 to 13 g of proline, from 3 to 11 g of serine, and/or salts thereof, per kg dry matter of the diet.

Preferably, the diet for use in the prophylaxis and/or treatment of campylobacteriosis in poultry comprises from 16 g +/- 10% to 18 g +/- 10% of aspartic acid, from 37 g +/- 10% to 40 g +/- 10% of glutamic acid, from 8 g +/- 10% to 11 g +/- 10% of proline, from 8 g +/- 10% to 10 g +/- 10% of serine, and/or salts thereof, per kg dry matter of the diet.

The diet for use in the prophylaxis and/or treatment of campylobacteriosis in poultry comprises 160 g +/- 10% to 190 g +/- 10% at the most of crude protein per kg dry matter of the diet.

Preferably, the diet for use in the prophylaxis and/or treatment of campylobacteriosis comprises all amino acids and/or salts thereof, which are essential for poultry, in particular chicken.

The diet for use in the prophylaxis and/or treatment of campylobacteriosis comprises at least 5 g of methionine, 2-hydroxy-(4-methylthio)butanoic acid and/or a salt thereof, per kg dry matter of the diet.

In one embodiment the diet for use in the prophylaxis and/or treatment of campylobacteriosis in poultry comprises at least 5 g of each of the amino acids arginine, isoleucine, lysine, threonine, valine and/or salts thereof, per kg dry matter of the diet.

In another embodiment, the diet for use in the prophylaxis and/or treatment of campylobacteriosis in poultry comprises at least 13 g arginine, at least 8 g isoleucine, at least 12 g lysine, at least 5 g methionine, at least 8 g threonine, at least 9 g valine, and/or salts thereof, per kg dry matter of the diet.

Preferably, the diet for use in the prophylaxis and/or treatment of campylobacteriosis in poultry is applied to chicken. In particular, the diet for use in the prophylaxis and/or treatment of campylobacteriosis is applied to poultry in the 3^{rd} to 6^{th} week of their life. Especially, the diet for use in the prophylaxis and/or treatment of campylobacteriosis is applied to chicken, preferably in the 3^{rd} to 6^{th} week of their life.

### Experiments

### I. Material and methods

Animal experiments were performed in accordance with the German rules and regulations and approved by the Ethics Committee of Lower Saxony for Care and Use of Laboratory Animals LAVES (Niedersächsisches Landesamt für Verbraucherschutz und Lebensmittelsicherheit; reference: 33.19-42502-05-15A540).

### Animals and Housing

Newly hatched chickens (day 0 = d 0) of both sexes (N=300; ROSS 308) were obtained from a commercial hatchery (BWE-Brüterei Weser Ems, PHW Gruppe / LOHMANN & Co. AG, Visbek, Germany).

Before commencing with the main experiments at d 14 of life, the birds were housed in four identical floor pens littered with wood shavings. The pens were each equipped with an infrared lamp to achieve a temperature at the outset of about 34-36 °C. The temperature was lowered by about 1 °C every two days, reaching a minimum temperature of about 20 °C. The photoperiod beginning from d 4 was 16 h of light and 8 h of darkness during the whole trial.

After the fourteen-day rearing phase, the animals were transferred from the rearing shed to the infection unit of the animal house (security level 2). At this time, the animals were randomly subdivided into 20 subgroups in a 2x2 factorial design with two different diets and a different infections modus (SPCN-Standard Protein, Campylobacter Negative; LPCN-Low Protein, Campylobacter Negative; SPCP-Standard Protein, Campylobacter Positive; LPCP-Low Protein, Campylobacter Positive).

The animals were kept on solid floor pens in groups of 15 animals ("subgroup") up to the end of the experimental period (d 42) or rather up to dissection (d 43-45). Each subgroup had an unrestricted floor space available (total area minus the area under the trough) of 1.45 m². The maximum stocking density of 35 kg body weight per square metre (in accordance with the animal welfare regulations) was never exceeded. Boxes were littered with wood shavings (1 kg/m²).

### Feeding regime and feed analysis

This rearing phase was divided into a one-week starter phase with a conventional pelleted starter diet (starter) and a subsequent 7-day phase with a commercially available pelleted grower diet (grower). The diets were delivered from a feed company producing compound diets (Best 3 Geflügelernährung GmbH, Twistringen, Germany). All diets were offered ad libitum. During the first 3 days additional feed was available (about 300 g/d) on so-called Chickpaper to accustom the birds to the feed.

Diets for the main experimental period (d 14-42) were produced in cooperation with Evonik Nutrition & Care GmbH (Hanau-Wolfgang, Germany) and a special manufacturerfortrial diets (Research Diet Services BV, Wijk bij Duurstede, the Netherlands; **Table 1).** The different diets were designed in accordance with the recommendations for the energy and nutrient supply of the laying hens and fowls (broilers) of the Committee for Needs Standards of the Society for Nutritional Physiology (GfE, 1999). The standard diet (SP-diet) was in accordance with a commercially available standard fattening diet concerning ingredients and composition **(Table 2).** The low-protein diet (LP-diet) contained a smaller amount of soybean meal and therefore had a reduced crude protein content. The growth limiting amino acids lysine, methionine, threonine, L-isoleucine, valine and L-arginine were added to the LP-diet in higher proportions than to the SP-diet in order to compensate for the lower proportion of soybean meal. All diets were offered ad libitum. Circular feeding troughs were used during the whole trial (Crown Poultry Feeders, New Zealand). Water was offered ad libitum in double-cylinder plastic bell drinkers in the rearing phase, later via drinking lines equipped with Top Nipples with drink cup (Big Dutchman International GmbH, Vechta-Calveslage, Germany). The water was treated with chlorine dioxide (Virbac Clean Pipe, VIRBAC Tierarzneimittel GmbH, Bad Oldesloe, Germany) at a concentration of 0.3 mg CIO₂/L to kill any C. *jejuni* in the drinking water.

**Table 1: Ingredient composition of the standard protein diet and the low protein diet for the main experimental period**

| **Ingredients (%)** | **SP-diet¹** | **LP-diet** |
|---|---|---|
| wheat | 41.4 | 47.1 |
| corn | 25.0 | 25.0 |
| soybean meal² | 24.1 | 18.0 |
| soybean oil | 5.16 | 4.43 |
| monocalcium phosphate | 1.37 | 1.38 |
| calcium carbonate | 1.28 | 1.72 |
| premix "Blank Poultry"³ | 0.50 | 0.50 |
| L-Lysin-HCl®⁴ | 0.26 | 0.45 |
| sodium bicarbonate | 0.25 | 0.35 |
| MetAMINO®⁵ | 0.25 | 0.30 |
| sodium chloride | 0.20 | 0.13 |
| ThreAMINO®⁶ | 0.10 | 0.18 |
| L-Isoleucin | 0.06 | 0.16 |
| ValAMINO®⁷ | 0.06 | 0.16 |
| L-Arginin | 0.00 | 0.17 |

| | | |
|---|---|---|
| ¹ The sum of all the ingredients does not give 100 according to rounding differences. ² 48 % crude protein ³ Carrier: cornflour; content per kg: iron [16 000 mg], copper [2 400 mg], manganese [17 000 mg], zinc [12 000 mg], iodine [160 mg], selenium [30 mg], vitamin A [2 000 000 IU], vitamin D3 [IU], vitamin E [10 000 mg], vitamin K3 [ 300 mg], vitamin B1 [400 mg], vitamin B2 [1 500 mg], vitamin B6 [700 mg], vitamin B12 [4 000 µg], niacin [7 000 mg], D-pantothenic acid [2 400 mg], choline chloride [92 000 mg], folic acid [200 mg], biotin [40 mg]. ⁴ 78.0 % L-Lysin ⁵ 99.0 % DL-Methionin ⁶ 98.5 % L-Threonin ⁷ 98.0 % L-Valin | | |

**Table 2: Energy content and concentrations of ingredients in the isoenergetic (14.3 MJ/kg DM) standard protein diet and the low protein diet for broilers in the main experimental period**

| **Ingredients** | **SP-diet** | **LP-diet** |
|---|---|---|
| dry matter [g/kg diet] | 884 | 884 |
| crude ash [g/kg DM] | 57.6 | 57.6 |
| crude fat [g/kg DM] | 81.0 | 71.7 |
| crude fibre [g/kg DM] | 27.1 | 25.0 |
| crude protein [g/kg DM] | 212 | 190 |
| nitrogen free extract¹ [g/kg DM] | 622 | 655 |
| starch [g/kg DM] | 455 | 499 |
| sugar [g/kg DM] | 50.7 | 45.6 |
| calcium [g/kg DM] | 10.2 | 12.1 |
| phosphorous [g/kg DM] | 7.68 | 6,59 |
| potassium [g/kg DM] | 8.66 | 8.34 |
| sodium [g/kg DM] | 1.85 | 1.96 |
| chloride [g/kg DM] | 2.77 | 2.79 |
| magnesium [g/kg DM] | 1.92 | 1.80 |
| arginine [g/kg DM] | 13.5 | 13.2 |
| cysteine [g/kg DM] | 3.36 | 3.24 |
| isoleucine [g/kg DM] | 8.71 | 8.60 |
| leucine [g/kg DM] | 16.4 | 13.7 |
| lysine [g/kg DM] | 13.3 | 12.6 |
| methionine [g/kg DM] | 4.62 | 5.28 |
| phenylalanine [g/kg DM] | 10.2 | 8.36 |
| threonine [g/kg DM] | 8.69 | 8.34 |
| valine [g/kg DM] | 9.39 | 9.44 |
| alanine [g/kg DM] | 9.53 | 8.09 |
| aspartic acid [g/kg DM] | 20.6 | 17.0 |
| glutamic acid [g/kg DM] | 45.1 | 39.0 |
| glycine [g/kg DM] | 8.87 | 7.49 |
| histidine [g/kg DM] | 5.33 | 4.61 |
| proline [g/kg DM] | 13.2 | 10.8 |
| serine [g/kg DM] | 11.1 | 9.22 |
| tyrosine [g/kg DM] | 6.89 | 5.93 |

| | | |
|---|---|---|
| SP-diet = Standard protein diet; LP-diet = Low protein diet ¹ Nitrogen-free extract = DM - (crude ash + crude fat + crude fibre + crude protein) ² Metabolisable energy (MJ/kg DM)=0,1551×% crude protein+0,3431 ×% crude fat+0,1669×% starch+0,1301×% sugar | | |

Diets were analysed by standard procedures in accordance with the official methods of the VDLUFA (Naumann and Bassler, 2012). The analyses were always performed in duplicate. The dry matter content (DM) was determined by drying to the weight constancy at 103 °C. The raw ash was analysed by means of incineration in the muffle furnace at 600 °C for 6 hours. The total nitrogen content was determined by means of the analyzer Vario Max® (Elementar, Hanau, Germany), which operates according to the principle of a catalytic tube combustion (DUMAS combustion method). Molecular nitrogen formed by reduction from nitric oxide was detected by a thermal conductivity detector. The nitrogen content was calculated with the device software. Therefore, the crude protein content of the sample was determined by multiplication with a constant factor of 6.25. The crude fat content was determined after acid digestion in the soxleth apparatus. The content of crude fibre was determined after washing in dilute acids and alkalis using established methods. Starch determination was carried out polarimetrically (Polatronic E, Schmidt und Haensch GmbH & Co., Berlin, Germany). The sugar content was analysed by the method according to Luff-Schoorl by titration with sodium thiosulphate. The mineral content was determined in accordance with the official methods (Naumann and Bassler, 2012) by atomic absorption spectrometry (Unicam Solaar 116, from Thermo, Dreieich, Germany). Amino acids were determined by ion-exchange chromatography (AA analyser LC 3000, Biotronic, Maintal, Germany) and results evaluated in accordance with established methods (Vervuert *et al*., 2005).

### II. Feeding test A

### Experimental infection and sampling

The experimental infection with C. *jejuni* took place at d 21 in all subgroups of the groups SPCP and LPCP. In each subgroup (n=5 per treatment), 3 out of 15 broilers in a box were administered orally with a C. *jejuni* suspension. A field strain of C. *jejuni* was used for experimental infection (Jansen et *al*., 2014). This isolate was identified as *C*. *jejuni* both culturally and mass-spectrometrically (MALDI-TOF MS) in an accredited laboratory (AniCon Labor GmbH, Holtinghausen, Germany). The conserved strain for experimental infection was recultivated on solid selective culture media (mCCD agar; Oxoid Germany GmbH, Wesel, Germany). After incubation at 41.5 °C in a microaerobic atmosphere for 43.5 hours, the infection strain was used in its stationary growth phase (24 h to 48 h) for preparing the infection solution. An isotonic 0.9 % sodium chloride solution was used as the basis for the infection bouillon. A defined density of *C*. *jejuni* was adjusted (0.5 McFarland units corresponding to about 1 × 10⁷ CFU *C*. *jejuni* per mL) using a densitometer (DEN 1B, biosan SIA, Riga, Latvia). To obtain an infection dose of about 10,000 CFU/2 mL of infection solution, the solution was further diluted with sodium chloride. Three parallel batches were prepared. For the experimental infection, 3 out of 15 animals were randomly selected. Infection bouillon was administered orally by means of a button cannula (single-button cannula, sterile, 1.0 × 100 mm, Meiser Medical GmbH, Neuenstein, Germany). Each of the three identically prepared infection solutions was used for only one animal per subgroup. Analogous to the groups with experimental infection, 3 out of 15 animals were randomly selected in the non-infected control groups (SPCN and LPCN). These animals were administered 2 mL of a sterile sodium chloride solution by means of a button cannula.

Prior to the described experimental infection, Campylobacter exclusion diagnosis was performed. At day 18 a sample of five animals per subgroup and at day 21 each individual animal (N=300) were tested by means of a cloacal swab (Cary Blair smear test system, Süsse Labortechnik GmbH & Co. KG, Gudensberg, Germany) regarding a possible excretion of *C*. *jejuni.* In the same way, a sampling of all animals in the groups SPCP and LPCP (n=75/group) was carried out at days 22, 23, 24, 25, 28, 35, and 42. In the groups SPCN and LPCN regular spotchecks were carried out on the excretion of *C*. *jejuni.* For this purpose, five randomly selected animals per subgroup were examined by means of cloacal swabs and further cultural Campylobacter detection. At the end of the trial (d 42) animals from all groups were qualitatively tested concerning their Campylobacter status. In addition to these qualitative studies, determining the colony forming units of *C. jejuni* in excreta of seeder birds in groups SPCP und LPCP was done at days 23, 32 and 38. For excreta collection, the corresponding animals were individually placed in purified, disinfected 10 L plastic bucket ( 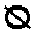 26.5 cm) to collect fresh excreta.

### Dissection

Following the experimental period (d 21-42), a dissection of the animals was performed on three consecutive days (d 43, 44 and 45). For each dissection day, five animals from each subgroup were taken, one of them being a seeder bird. Before anaesthesia by head stroke the live weight of the animals was recorded. After the bleeding the animals the body cavity was opened, the sternum lifted up and the gastrointestinal tract removed. The other organs of the corpuscle (liver, gall-bladder, spleen, and heart) were also removed and the head and legs in the tarsal joint were truncated. The feathers were not removed. After extracting the gastrointestinal tract from the abdominal cavity, the contents of the two caeca were removed under sterile provisos and placed in a screw cup (screw cup 100 mL, PP, Sarstedt AG & Co., Nümbrecht, Germany) for counting colony forming units of C. *jejuni* for all animals in groups SPCP and LPCP.

For determining the number of goblet cells in the crypts of caeca, tissue samples of caeca were collected on the day of dissection. For this purpose, an approximately 1 cm long piece was removed from the apex of the right caecum approximately 1 cm proximal to the apex and fixed in 4 % formaldehyde for 48 hours.

### Histological investigations

After fixing histological samples these were rinsed under running tap water for 2 hours in an embedding cassette and drained overnight in an embedding machine (ASP 300 S, Leica Biosystems Nussloch GmbH, Nussloch, Germany). The embedding in paraffin was prepared using xylene. The embedding in paraffin blocks itself took place with a pouring station (Leica E61150H, Leica Biosystems Nussloch GmbH, Nussloch, Germany). The cured blocks were finally cut into 4 µm thick sections using a rotary microtome (Leitz 1512, Ernst Leitz Wetzlar GmbH, Austria) and stretched at 37 °C in a water bath (GFL Gesellschaft für Labortechnik GmbH, Burgwedel, Germany). Finally, the sections were dried at 60 °C on silanised slide supports (Histobond®, Paul Marienfeld GmbH & Co. KG, Lauda-Königshofen, Germany). After dewaxing and rehydration a hematoxylin-eosin staining (HE staining) was performed. Following the staining, the samples were dehydrated and then covered with Eukitt (O. Kindler GmbH, Freiburg, Germany).

The analysis of the samples was done in accordance with established methods (Horn *et al*., 2009) with slight modifications. The enlargement factor 200 was taken using an axioscope (Carl Zeiss Jena GmbH, Jena, Germany) and a microscope camera (Microscope camera DP 70, software DP Soft, Olympus Europa GmbH, Hamburg, Germany). In each of the blinded samples, the depth of five complete vertically oriented crypts was measured. The goblet cells of the crypt were counted. Subsequently, an average crypt depth of about 250 µm was calculated from the crypt depths of all the samples examined in both experiments. This mean crypt depth was defined as the standard crypt depth. The number of goblet cells of the individual, measured crypts of each sample was converted to this depth for better comparability.

### Excreta and litter sampling and analysis

Samples of fresh excreta of the birds were collected from each box at d 20, d 28 (only SPCN and LPCN), d 35 (only SPCN and LPCN) and d 42 in accordance with established methods (Abd El-Wahab *et al*., 2012b). The collected excreta were then removed from each box, thoroughly mixed and processed in parts for further analysis (mucin content) or dried at 103 °C to determine the DM content.

Litter samples for measuring dry matter content were collected at the end of the trial as previously described (Abd El-Wahab *et al*., 2012b). Subsamples of approximately 100 g were taken to assess moisture content by drying at 103 °C until a constant mass was obtained.

### Mucin content

The content of total mucin was determined in pool samples of excreta. Quantifying the water-soluble and ethanol-precipitable fraction of excreta was carried out in accordance with modified methods (Lien *et al*., 1997, Horn *et al*., 2009).

Approximately 3 g of the freeze-dried sample were mixed with 20 mL of a cooled sodium chloride solution (0.15 mol of NaCl and 0.02 mol of NH₃ per litre) by shaking in a shaker (Reax 2000, Fa. Heidolph Instruments GmbH & Co. KG, Schwabach, Germany). After that, the mixture was homogenised for 30 seconds (disperser Ultra Turrax T 25, IKA Werke GmbH & CO. KG, Staufen, Germany). The insoluble parts of the sample were separated from the soluble parts by centrifugation for 30 min at 4 °C and 12,000×g (Biofuge Stratos, Heraeus Holding GmbH, Hanau, Germany). The soluble supernatant was transferred to a new 50 mL centrifuge tube and the dissolved mucin glycoproteins precipitated overnight at 18 °C by adding 15 mL of cooled pure ethanol. Repeated centrifugation for 10 min at 4 °C and 1400×g and then discarding the supernatant separated the precipitate from soluble components which were not precipitable in ethanol. The precipitate was resuspended in 10 mL of cooled sodium chloride solution and precipitated again overnight at 18 °C by adding 15 mL of cooled ethanol. These operations, consisting of centrifugation, resuspension of the precipitate and re-precipitation were repeated until the supernatant was free of opacities after centrifugation. The final pellet was resuspended in the sodium chloride solution and transferred to a pre-weighed 50 mL tube. Here it was freeze-dried. The proportion of mucins could be determined by re-weighing the tube. In order to take account of the rewetting of the sample during the milling process, a correction factor k was first calculated (k=100/DM share in %; after grinding). After that, with the correction factor the total mucin content in the dry matter of the excreta was finally calculated: Total mucin (% share of excreta DM)=k x (finishing weight mucins/starting weight sample) x 100.

### Bacteriological analyses

The qualitative bacteriological examination was based on the DIN EN ISO 10272-1:2006, taken from the official collection of analysis methods in accordance with § 64 LFBG. First, pre-enrichment was performed in a liquid selective nutrient medium (Bolton Boullion). For this purpose, 500 mL of a basic nutrient medium (Bolton Brothbase, VWR International GmbH, Darmstadt, Germany) were first heated to 50 °C in a water bath (GFL Gesellschaft für Labortechnik GmbH, Burgwedel, Germany). Lyophilised additives (Oxoid™ Modified Bolton Broth Selective Supplement, Oxoid Deutschland GmbH, Wesel, Germany) were resuspended in a mixture of 2.5 mL ethanol and 2.5 mL autoclaved water. Subsequently, the additives were first transferred to the base nutrient medium, 25 mL lysed horse blood (Oxoid Deutschland GmbH, Wesel, Germany) subsequently being added.

The sample matrix to be examined was incubated in a one-to-nine ratio (sample:bolton-boullion) in sterile 5 mL tubes mounted with a vent cap (Sarstedt AG & Co., Nümbrecht, Germany). Incubation lasting 4 h at 37 °C was followed by 44 h±4 h at 41.5 °C under a microaerobic atmosphere (oxygen content of 5 %±2 %, carbon dioxide content of 10 %±3 %) in a CO₂ incubator with O₂ control (CB 160, BINDER GmbH , Tuttlingen, Germany). After enrichment, the samples were streaked onto two solid selective culture media (mCCD agar and Karmali agar; Oxoid Germany GmbH, Wesel, Germany) by sterile inoculation loops. The incubation of the inoculated selective culture was carried out again for 44 h±4 h at 41.5 °C in a microaerophilic atmosphere. Individual colonies were analysed to confirm the presence of Campylobacter. This was done by phase contrast microscopy (Distelkamp-Electronic, Kaiserslautern, Germany) and biochemical methods (apiCampy, bioMérieux SA, Marcy-Létoile, France).

For quantitative bacteriological examination a 10-fold dilution series (0.5 g sample material in 4.5 mL of sterile Phosphate Buffered Saline - PBS) was made with PBS (Phosphate Buffered Saline, Oxoid Germany GmbH, Wesel, Germany). In duplicate, 100 µL of each dilution was plated onto mCCD agar (Oxoid Germany GmbH, Wesel, Germany). After incubation in a microaerophilic atmosphere for 44 h±4 h at 41.5 ° C, the colonies were counted and an average value from the two duplicate experiments was taken for calculating the CFU/g intestinal content. In accordance with DIN EN ISO 10272-2:2006 only plates with more than 30 and fewer than 300 colonies were considered.

An exclusion diagnosis concerning *Salmonella* spp. was performed as previously described (Ratert *et al*., 2014). Detection concerning coccidia was done weekly by an already described method (Abd El-Wahab *et al*., 2013).

### Performance Parameters

The body weight of the animals was recorded individually at days 7, 14, 21 and 42 (PCE TB 30, PCE Instruments, Meschede, Germany). The feed and water intake were recorded at the level of the subgroup (n=5 per treatment). Each subgroup had a 30 L polypropylene feed bucket into which the feed for the corresponding subgroup for the whole experimental period was stored. The feeding troughs were filled daily from these buckets. At the end of the trial, residuals in the troughs and buckets were weighed on a subgroup level (Systemwaage PCE TB 30, PCE Instruments, Meschede). The fresh drinking water for the storage tanks of the specific subgroups was weighed before filling the tanks daily.

Feed conversion ratio (FCR) reflects feed consumption per kilogramme of body weight gain. The animal losses were taken into account by adding the increase in body weight until the time of death. Protein efficiency was calculated as the increase in body weight per kilogramme of crude protein intake. Animal losses were taken into consideration for this parameter. The feed-water ratio was calculated as the ratio of water intake to feed intake. At the time of dissection (d 43, 44 and 45), the slaughtering weight (body with feathers and without head, feet, gastrointestinal tract, liver, gallbladder, spleen, heart) and the slaughtering exploitations were calculated as a quotient of slaughter weight to the body mass (in %).

### Statistical analyses

The statistical analysis of the collected data was performed using the Statistical Analysis System for Windows the SAS® Enterprise Guide®, version 9.3 (SAS Institute Inc. Cary, USA). For a comparison of mean values, the normal distribution of the residues was tested first with a Shapiro-Wilk test. Normal distributed data were examined for differences in mean values by a one-factorial analysis of variance for multiple pairwise comparisons (Fisher's smallest significant difference). In the case of non-normalised data, comparisons with a Wilcoxon signed-rank test were carried out in pairs to investigate differences in the mean values. For comparing a sample with a constant, a one-sample t test was used for normal distributed data. If uniform distribution of the sample was present, two-dimensional frequency distributions of categorial features were checked for dependency with the Chi square homogeneity test according to Pearson. Otherwise, the Fisher's exact test was used.

Correlation analyses were carried out on normal distributed data using Pearson's correlation coefficient and on non-normalised data using Spearman's rank correlation coefficient.

At P<0.05, differences in the mean values or a dependence of the frequency distribution or a correlation were regarded as significant.

### III. Feeding test B (choice test)

In the first week after the experimental infection with Campylobacter jejeuni the animals were also given a diet consisting of 62.54 parts of a protein-rich diet (standard protein diet) and 37.46 parts of a protein-low ration (low protein diet). For this purpose two feeding troughs, one with the protein-rich and the other with the protein-low ration, were placed in the floor pens of five groups of broilers for a period of a week. Accordingly, the animals had the choice between the protein-rich ration and the protein-low ration. In the latter this feeding test, i.e. feeding test B, is therefore also referred to as choice test. The weight differences (weight losses) of the individual troughs before and after the choice test were determined. The weight losses of the individual troughs indicate how much of the protein-rich standard diet and of the low protein diet was eaten by the animals. Based on the composition of individual diets, this analytical result also allows to determine the actual uptake of nutrients. The actual uptake of nutrients was put into ratio with the respective control ration of the feeding test A, which is listed in **Table 4** in the columns SP-diet (%) and LP-diet (%).

The thus obtained data show that the nutrients uptake with the LP-diet in the feeding test B is in most cases higher than the nutrients uptake with the LP-diet in the feeding test A. In particular, the crude protein uptake is higher when the animals have the freedom of choice. It appears that once the animals have felt the difference and in particular the reduced crude protein content in the LP-diet, they eat more of said diet in order to compensate the lower crude protein content. It is believed that the Campylobacter triggers the animals to eat the diet which is life-sustaining for the Campylobacter.

These findings show that the only way of reducing the campylobacteriosis in poultry is to impose a low protein diet on the animals.

**Table 4: Overview of the feeding tests A and B**

| **Ingredient** | **Feeding test A** | | **Feeding test B (choice test)** | | | |
|---|---|---|---|---|---|---|
| | SP-diet | LP-diet | Choice | SP-diet (%) | LP-diet (%) | control |
| dry matter [g/kg diet] | 884.00 | 884.00 | 883.88 | 99.99 | 99.99 | 883.00 |
| crude ash [g/kg DM] | 57.60 | 57.60 | 53.51 | 92.90 | 92.90 | 53.00 |
| crude fat | 81.00 | 71.70 | 77.21 | 95.32 | 107.69 | 80.60 |
| crude fiber | 27.10 | 25.00 | 27.48 | 101.39 | 109.91 | 28.90 |
| crude protein | 212.00 | 190.00 | 219.81 | 103.68 | 115.69 | 216.30 |
| nitrogen free extract¹ | 622.00 | 655.00 | 621.99 | 100.00 | 94.96 | 621.20 |
| starch | 455.00 | 499.00 | 460.32 | 101.17 | 92.25 | 459.80 |
| sugar | 50.70 | 45.60 | 45.82 | 90.38 | 100.49 | 46.10 |
| calcium | 10.20 | 12.10 | 9.73 | 95.37 | 80.39 | 9.41 |
| phosphorous | 7.68 | 6.59 | 7.79 | 101.47 | 118.26 | 7.78 |
| potassium | 8.66 | 8.34 | 9.21 | 106.39 | 110.47 | 8.32 |
| sodium | 1.85 | 1.96 | 1.85 | 99.93 | 94.32 | 1.86 |
| chloride | 2.77 | 2.79 | 2.71 | 97.88 | 97.17 | 2.74 |
| magnesium | 1.92 | 1.80 | 1.88 | 97.74 | 104.26 | 1.85 |
| sulphur | 3.22 | 2.87 | 3.01 | 93.57 | 104.98 | 2.96 |
| metabolisable energy² [MJ/kg DM] | 14.30 | 14.30 | 14.35 | 100.35 | 100.35 | 14.40 |
| arginine [g/kg DM] | 13.50 | 13.20 | 14.09 | 104.40 | 106.77 | 13.82 |
| cysteine | 3.36 | 3.24 | 4.39 | 130.76 | 135.60 | 4.55 |
| isoleucine | 8.71 | 8.60 | 9.65 | 110.82 | 112.24 | 9.39 |
| leucine | 16.40 | 13.70 | 16.56 | 100.96 | 120.85 | 16.19 |
| lysine | 13.30 | 12.60 | 13.28 | 99.85 | 105.40 | 12.80 |
| methionine | 4.62 | 5.28 | 6.11 | 132.29 | 115.75 | 6.10 |
| phenylalanine | 10.20 | 8.36 | 10.48 | 102.79 | 125.41 | 10.35 |
| threonine | 8.69 | 8.34 | 9.04 | 103.98 | 108.34 | 8.02 |
| valine | 9.39 | 9.44 | 10.65 | 113.41 | 112.80 | 10.32 |
| alanine | 9.53 | 8.09 | 9.37 | 98.33 | 115.83 | 9.18 |
| aspartic acid | 20.60 | 17.00 | 19.78 | 96.02 | 116.36 | 19.93 |
| glutamic acid | 45.10 | 39.00 | 42.38 | 93.96 | 108.66 | 41.22 |
| glycine | 8.87 | 7.49 | 8.82 | 99.49 | 117.82 | 8.56 |
| histidine | 5.33 | 4.61 | 5.68 | 106.60 | 123.25 | 5.44 |
| proline | 13.20 | 10.80 | 14.58 | 110.43 | 134.98 | 13.93 |
| serine | 11.10 | 9.22 | 10.88 | 98.05 | 118.04 | 10.15 |
| tyrosine | 6.89 | 5.93 | 7.40 | 107.46 | 124.85 | 8.02 |

| | | | | | | |
|---|---|---|---|---|---|---|
| SP-diet = Standard protein diet; LP-diet = Low protein diet ¹ Nitrogen-free extract = DM - (crude ash + crude fat + crude fibre + crude protein) ² Metabolisable energy (MJ/kg DM)=0,1551×% crude protein+0,3431×% crude fat+0,1669×% starch+0,1301×% sugar | | | | | | |

### IV. Results

The experiment ran completely without complications as regards animal health. Mortality was 2.33 %. Five out of 300 broilers used in the experiment died during the experiment, two had to be euthanised. Six of these animals were excluded from the experiment within the trial period (d 21-42) and one animal after completion of the trial, but before starting dissection (losses in %: SPCN: 4.00 %, LPNC: 2.67 %, SPCP: 1.33 %, LPCP: 1.33 %).

### Histology of the intestine

For determining the goblet cells in the caeca, histological tissue samples of the experimentally-infected experimental groups SPCP and LPCP were examined. This histological examination showed a very uniform crypt depth for the two experimental groups **(Table 4)**. The number of goblet cells was significantly higher (P=0.0267) in the group SPCP (15.1±5.71) than in the experimental group LPCP (13.6±5.91).

**Table 4: Crypt depth and the number of goblet cells in the caeca of broiler chickens**

| **Item** | **Diet** | | | | |
|---|---|---|---|---|---|
| | SP-diet | | LP-diet | | P-value |
| | Mean | SD | Mean | SD | |
| Crypt death (µm; n= 25 or rather n=24 per diet) | 256a | ±57.7 | 259a | ±59.1 | 0.6474 |
| Goblet cells per standard crypt¹ | 15.1a | ±5.71 | 13.6b | ±5.91 | 0.0267 |

| | | | | | |
|---|---|---|---|---|---|
| SP-diet = Standard protein diet; LP-diet = Low protein diet ¹ Determined goblet cell number to 250 µm crypt depth ^{a,b} Values within a row with different superscripts differ significantly at P<0.05. | | | | | |

### Mucins in Excreta

The total mucin content in the excreta showed a continuous increase from d 20 to d 42 in all groups **(Table 5).** An influence of the infection of the samples examined at d 42 on the total mucin content of excrements was not apparent (CN: 60.4±7.06 or CP: 59.8±7.74 g total mucin/kg excrements). Significant differences were found in the overall concentrations of mucins in excreta depending on the diet at d 28, d 35 and d 42. The total mucin content in excreta in control animals was higher. On average, the total mucin content of the excreta in animals receiving the SP-diet was 55.7±8.23 g/kg DM. Using the LP-diet significantly reduced the mucin content (51.9±7.62 g/kg DM; P=0.0062).

**Table 5: Total mucin content (g/kg DM) of the excreta of broiler chickens**

| **Day** | **N** | **SP-diet** | | **LP-diet** | | P-value |
|---|---|---|---|---|---|---|
| | | Mean | SD | Mean | SD | |
| **20** | 10 | 46.6 | 4.28 | 43.6 | 1.66 | 0.0620 |
| **28** | 15 | 51.1^{a} | 3.43 | 47.7^{b} | 3.94 | 0.0171 |
| **35** | 15 | 53.1^{a} | 3.93 | 49.6^{b} | 4.69 | 0.0144 |
| **42** | 30 | 62.3^{a} | 7.40 | 58.0^{b} | 6.75 | 0.0217 |

| | | | | | | |
|---|---|---|---|---|---|---|
| SP-diet = Standard protein diet; LP-diet = Low protein diet ^{a,b} Values within a row with different superscripts differ significantly at P<0.05. | | | | | | |

### Campylobacter excretion

The solutions for the experimental infection contained an average of 4.17±0.09 log10 CFU *C*.*jejuni* per infection dose (2 mL).

Before and at the time of the experimental infection, all animals in the experiment were Camplylobacter spp. negative in cloacal swabs (N=300). Due to the experimental infection at d 21, the SPCP and LPCP groups were exposed to a *C. jejuni* infection. Already one day after this infection, an excretion of *C. jejuni* could be seen with cultural techniques (Table 6). At day two post infection, already 12 animals in the group receiving the SPCP-diet and ten animals receiving the LPCP-diet were C. *jejuni* positive in excreta. The prevalence in LPCP animals was numerically lower up to d 29. At d 25, differences in prevalence were significant (P=0.0044). The number of C. *jejuni* positive animals continued to increase in both experimental groups until the prevalence nearly reached 100 % at d 29 in both groups. From d 29 until the end of the trial there were no differences.

At d 23 (P=0.0333) and d 38 (P=0.1167) the mean values of log₁₀ CFU C. *jejuni* in the excreta of the seeder animals (15 animals per group) were lower in group LPCP **(Table 6)**. The mean counts of *C. jejuni* in the caecal content did not differ between the SPCP and LPCP groups.

The SPCN and LPCN groups were not experimentally infected with C. *jejuni.* From d 21 onwards, regular random tests of these non-experimentally infected groups were carried out using cloacal swabs. Up to d 30, all of these samples were C. *jejuni* negative. At the time of the next sampling (d 37), C. *jejuni* could be detected. At the end of the trial (d 42), the prevalence of C. *jejuni* in cloacal swabs in these non-experimentally infected groups amounted to 79.5 % (SPCN) and 94.5 % (LPCN), respectively.

**Table 6: Prevalence of C. jejuni in cloacal swabs of all animals and counts of C. jejuni in the excreta of the seeder birds (n = 15 per group) on days 23, 32 and 38 as well as total counts of C. jejuni in the caecal content of all animals on the day of dissection**

| **Item** | **Diet** | | | | |
|---|---|---|---|---|---|
| | **SP-diet** | | **LP-diet** | | **P-values** |
| | **% positive** | **n (pos./total)** | **% positive** | **n (pos./total)** | |
| **Prevalence on group level** | | | | | |
| **Day 18** | 0.00^{a} | (0/25) | 0.00^{a} | (0/25) | 1.0000 |
| **Day 21** | 0.00^{a} | (0/75) | 0.00^{a} | (0/75) | 1.0000 |
| **Day 22** | 1.33^{a} | (1/75) | 1.33^{a} | (1/75) | 1.0000 |
| **Day 23** | 16.0^{a} | (12/75) | 13.3^{a} | (10/75) | 0.6444 |
| **Day 24** | 50.7^{a} | (38/75) | 45.3^{a} | (34/75) | 0.5133 |
| **Day 25** | 75.7^{a} | (56/74) | 53.3^{a} | (40/75) | 0.0044 |
| **Day 29** | 100^{a} | (74/74) | 97.3^{a} | (73/75) | 0.4966 |
| **Day 35** | 98.7^{a} | (73/74) | 100^{a} | (74/74) | 1.0000 |
| **Day 39** | 97.3^{a} | (72/74) | 97.3^{a} | (72/74) | 1.0000 |
| **Day 42** | 97.3^{a} | (72/74) | 94.6^{a} | (70/74) | 0.4045 |
| **Quantitative counts C. jejeuni excreta seeder (log₁₀ cfu/g)** | | | | | |
| | **Mean** | **SD** | **Mean** | **SD** | **P-value** |
| **Day 23** | 3.38^{a} | 2.55 | 1.47^{b} | ±2.20 | 0.0333 |
| **Day 32** | 5.60^{a} | 0.97 | 5.59^{a} | ±1.03 | 0.9339 |
| **Day 38** | 4.67^{a} | 0.91 | 4.02^{a} | ±1.27 | 0.1167 |
| **Quantitative counts C. jejeuni caecal content (log₁₀ cfu/g)** | | | | | |
| **Dissection** | 7.94^{a} | ±0.60 | 8.09^{a} | ±0.73 | 0.1842 |

| | | | | | |
|---|---|---|---|---|---|
| SP-diet = Standard protein diet; LP-diet = Low protein diet ^{a,b} Values within a row with different superscripts differ significantly at P<0.05. | | | | | |

### Performance Parameters

The body mass of the animals during (d 7) and at the end of the rearing phase (d 14) showed no significant differences between the individual groups **(Table 7).** After the adaptation phase to the diet (d 14-20) and before experimental infection, the body mass of the SPCN-diet animals was higher than the body mass of LPCN- and LPCP-diet animals. At the end of the experimental period (d 42), the body mass of the SPCN animals was still significantly higher than the body mass of LPCN animals (P=0.0064). Between SPCN and LPCP animals, there was no difference anymore. The same applied to the increase in body weight during the experimental period. The body weight gain for SPCN animals was significantly higher (P=0.0040) than for LPCN animals. At the time of dissection, the body weight of SPCN animals was higher than in LPCN animals (P=0.0496), also the body weight gains between these groups (P=0.0039).

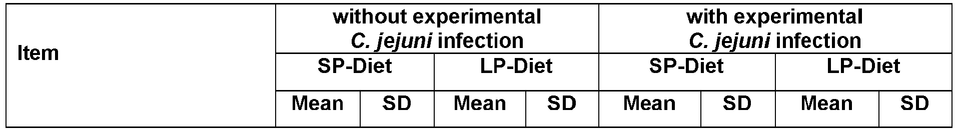

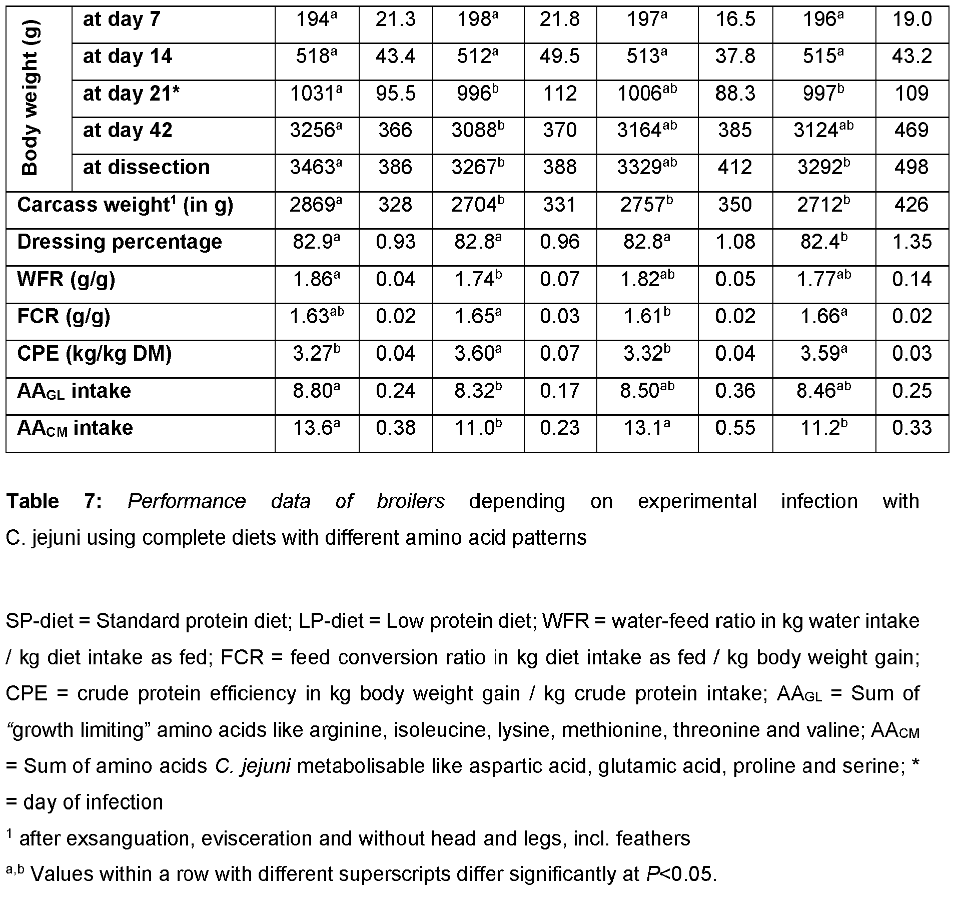

Finally, the group SPCN showed the significantly highest dressing weight (P<0.05), the group LPCP the significant lowest dressing percentage (P<0.05) at dissection.

### V. Discussion

The effects of a diet with reduced crude protein content and a specific amino acid pattern on the number of goblet cells in the caeca, the intestinal release of mucins, the course of an experimental infection of broilers with *C*. *jejuni,* the excreta and litter quality, and performance were tested. For this purpose, the crude protein content in the food ration of broilers was reduced from 212 to 190 g/kg DM. At the same time, the content of crystalline amino acids was increased to equalise the concentrations of the amino acids lysine, methionine, threonine, L-isoleucine, valine and L-arginine to the amounts of the SP diet with a crude protein content of 212 g/kg DM. In this way, the proportion of the amino acids important for the metabolism of *C*. *jejuni* (serine, aspartic acid, glutamic acid and proline) was decreased indirectly, thereby achieving a reduced daily intake of these amino acids.

### Histology of the intestine and mucin production

The number of goblet cells in the caeca was significantly lower in the groups being fed the LP diet than in the SP diet groups. The number of goblet cells can be regulated relatively quickly. Within two days, the differentiation of a goblet cell is completed. After a further two to three days, the cell undergoes continuous tissue regeneration of the intestinal mucosa. The significantly lower number of goblet cells in the LP group is an indication of a lower mucin release in the caeca of chicken fed the protein-reduced diet.

The daily crude protein intake in the experimental period from d 21 to d 42 and the total mucin content in the excreta at d 42 correlated significantly with one another (r²=0.73, P=0.0002).

A correlation between the average daily intake of threonine in the experimental period and the total mucin content in the excrements could be shown (r²=0.82, P<0.0001). This correlation was even more marked than the correlation between the crude protein intake and the mucin content of the excrement. At higher amino acid levels in the feed, more amino acids enter the intestinal tract and are available for mucin synthesis. Threonine was artificially added to the LP diet to ensure the optimal supply. Possibly, this counteracted an even clear reduction in the mucin content.

### Campylobacter excretion

Over a period of four days after the experimental infection, the prevalence of *C*. *jejuni* excretion was slightly lower in animals fed the LP-diet infection than those fed the SP-diet. Furthermore, a significantly lower shedding of *C*. *jejuni* via excreta could be determined.

High level of *C*. *jejuni* counts in excreta were also confirmed in the present study. Although bacterial growth itself does not seem possible, irrespective of the amounts of amino acids present in the caecum content and excreta, the use of these amino acids is still conceivable for maintaining bacterial homeostasis.

A lower prevalence within the herd and lower numbers of bacterial counts in intestinal content are associated with a lower risk of the transfer of microorganisms to the carcass during the slaughtering process. A correlation between the Campylobacter spp. prevalence of broilers and the proportion of positive carcasses as well as a correlation between bacterial counts in the caecum content and on broiler carcasses after slaughter could be shown. Furthermore, *C*. *jejuni* is not able to reproduce on the carcasses or the food. Instead, there is a successive reduction in the number of germs, depending on the storage temperature and storage time. In the case of a lower contamination of the carcasses in the context of the slaughtering process, a faster reduction of the pathogen occurs on both the carcass and the parts as well as in the further processed products. The reduction in bacterial counts in the excreta two days after experimental infection on d 23 determined in this study was 1.9 log₁₀ steps. Therefore, if the initial infection in a flock is close to the slaughter date, the effect can be promising, finally through a lower exposure of the consumer to C. *jejuni* through the consumption of poultry meat products.

### Performance

The increase in body weight during the experimental period (d 21-42) was significantly higher (P<0.0001) than the target of the breeding company Aviagen in all groups of the trial. This indicates a supply covering demand even with lower crude protein contents of the ingested ration. In the case of an experimental *C*. *jejuni* infection there was no difference in performance. This means that the developed dietary concept can be successfully used in flocks with a confirmed campylobacter infection.

### VI. Conclusion

In summary, a positive influence of lowering the crude protein content in the food ration on reducing the spread and the shedding of a C. jejuni infection in broilers was observed. A delayed spreading of C. jejuni infection among flocks is of special interest shortly before slaughter. This could lead to a reduction in the number of C. jejuni bacteria in the digestive tract and thus to a reduced risk of a transfer to the carcasses.

## Claims

1. Diet for feeding poultry comprising from 60 to less than 90 g of all of the amino acids aspartic acid, glutamic acid, proline, serine, and/or salts thereof, per kg dry matter of the diet, at least 5 g of methionine, 2-hydroxy-(4-methylthio)butanoic acid, and/or a salt thereof per kg dry matter of the diet, and from 160 g +/- 10% to 190 g +/- 10% crude protein per kg dry matter of the diet.

2. Diet according to claim 1, wherein the diet comprises from 67 g +/- 10% to less than 80 g +/-10% of all of the amino acids aspartic acid, glutamic acid, proline, serine, and/or salts thereof, per kg dry matter of the diet.

3. Diet according to claim 1, wherein the diet comprises from 65 to 85 g of all of the amino acids aspartic acid, glutamic acid, proline, serine and/or salts thereof, per kg dry matter of the diet.

4. Diet according to any of claims 1 to 3, wherein the diet comprises 20 g at the most of aspartic acid, 45 g at the most of glutamic acid, 13 g at the most of proline, 11 g at the most of serine, and/or salts thereof, per kg dry matter of the diet.

5. Diet according to any of claims 1 to 4, wherein the diet comprises from 10 to 20 g at the most of aspartic acid, from 30 to 45 g at the most of glutamic acid, from 5 to 13 g at the most of proline, from 3 to 11 g at the most of serine, and/or salts thereof, per kg dry matter of the diet.

6. Diet according to any of claims 1 to 5, wherein the diet comprises at least 5 g of each of the amino acids arginine, isoleucine, lysine, threonine, valine, and/or salts, per kg dry matter of the diet.

7. Diet according to any of claims 1 to 6, wherein the diet comprises at least 13 g arginine, at least 8 g isoleucine, at least 12 g lysine, at least 8 g threonine, at least 9 g valine, and/or salts thereof, per kg dry matter of the diet.

8. Diet for use in the treatment and/or prophylaxis of campylobacteriosis in poultry, wherein the diet comprises from 60 to less than 90 g of all of the amino acids aspartic acid, glutamic acid, proline, serine, and/or salts thereof per kg dry matter of the diet, at least 5 g of methionine, 2-hydroxy-(4-methylthio)butanoic acid, and/or a salt thereof per kg dry matter of the diet, and from 160 g +/- 10% to 190 g +/- 10% crude protein per kg dry matter of the diet.

9. Diet for use according to claim 8, wherein the diet comprises from 67 g +/- 10% to 80 g +/- 10% of all of the amino acids aspartic acid, glutamic acid, proline, serine, and/or salts thereof, per kg dry matter of the diet.

10. Diet for use according to claim 8 or 9, wherein the diet comprises from 65 to 85 g of all of the amino acids aspartic acid, glutamic acid, proline, serine, and/or salts thereof, per kg dry matter of the diet.

11. Diet for use according to any of claims 8 to 10, wherein the diet comprises 20 g at the most of aspartic acid, 45 g at the most of glutamic acid, 13 g at the most of proline, 11 g at the most of serine, and/or salts thereof, per kg dry matter of the diet.

12. Diet for use according to any of claims 8 to 11, wherein the diet comprises from 10 to 20 g at the most of aspartic acid, from 30 to 45 g at the most of glutamic acid, from 5 to 13 g at the most of proline, from 3 to 11 g at the most of serine, and/or salts thereof, per kg dry matter of the diet.

13. Diet for use according to any of claims 8 to 12, wherein the diet comprises at least 5 g of each of the amino acids arginine, isoleucine, lysine, threonine, valine, and/or salts, per kg dry matter of the diet.

14. Diet for use according to any of claims 8 to 13, wherein the diet comprises at least 13 g arginine, at least 8 g isoleucine, at least 12 g lysine, at least 8 g threonine, at least 9 g valine, and/or salts thereof, per kg dry matter of the diet.

## Patentansprüche

1. Futter zum Füttern von Geflügel, umfassend von 60 bis weniger als 90 g an allen der Aminosäuren Asparaginsäure, Glutaminsäure, Prolin, Serin und/oder Salzen davon pro kg Trockenmasse des Futters, wenigstens 5 g Methionin, 2-Hydroxy-(4-methylthio)butansäure und/oder ein Salz davon pro kg Trockenmasse des Futters und von 160 g +/- 10 % bis 190 g +/- 10 % Rohprotein pro kg Trockenmasse des Futters.

2. Futter gemäß Anspruch 1, wobei das Futter von 67 g +/- 10 % bis weniger als 80 g +/- 10 % an allen der Aminosäuren Asparaginsäure, Glutaminsäure, Prolin, Serin und/oder Salzen davon pro kg Trockenmasse des Futters umfasst.

3. Futter gemäß Anspruch 1, wobei das Futter von 65 bis 85 g an allen der Aminosäuren Asparaginsäure, Glutaminsäure, Prolin, Serin und/oder Salzen davon pro kg Trockenmasse des Futters umfasst.

4. Futter gemäß einem der Ansprüche 1 bis 3, wobei das Futter höchstens 20 g Asparaginsäure, höchstens 45 g Glutaminsäure, höchstens 13 g Prolin, höchstens 11 g Serin und/oder Salze davon pro kg Trockenmasse des Futters umfasst.

5. Futter gemäß einem der Ansprüche 1 bis 4, wobei das Futter von 10 bis höchstens 20 g Asparaginsäure, von 30 bis höchstens 45 g Glutaminsäure, von 5 bis höchstens 13 g Prolin, von 3 bis höchstens 11 g Serin und/oder Salze davon pro kg Trockenmasse des Futters umfasst.

6. Futter gemäß einem der Ansprüche 1 bis 5, wobei das Futter wenigstens 5 g von jeder der Aminosäuren Arginin, Isoleucin, Lysin, Threonin, Valin und/oder Salze pro kg Trockenmasse des Futters umfasst.

7. Futter gemäß einem der Ansprüche 1 bis 6, wobei das Futter wenigstens 13 g Arginin, wenigstens 8 g Isoleucin, wenigstens 12 g Lysin, wenigstens 8 g Threonin, wenigstens 9 g Valin und/oder Salze davon pro kg Trockenmasse des Futters umfasst.

8. Futter zur Verwendung bei der Behandlung und/oder Prophylaxe von Campylobacteriose bei Geflügel, wobei das Futter von 60 bis weniger als 90 g an allen der Aminosäuren Asparaginsäure, Glutaminsäure, Prolin, Serin und/oder Salzen davon pro kg Trockenmasse des Futters, wenigstens 5 g Methionin, 2-Hydroxy-(4-methylthio)butansäure und/oder ein Salz davon pro kg Trockenmasse des Futters und von 160 g +/- 10 % bis 190 g +/- 10 % Rohprotein pro kg Trockenmasse des Futters umfasst.

9. Futter zur Verwendung gemäß Anspruch 8, wobei das Futter von 67 g +/- 10 % bis 80 g +/- 10 % an allen der Aminosäuren Asparaginsäure, Glutaminsäure, Prolin, Serin und/oder Salzen davon pro kg Trockenmasse des Futters umfasst.

10. Futter zur Verwendung gemäß Anspruch 8 oder 9, wobei das Futter von 65 bis 85 g an allen der Aminosäuren Asparaginsäure, Glutaminsäure, Prolin, Serin und/oder Salze davon pro kg Trockenmasse des Futters umfasst.

11. Futter zur Verwendung gemäß einem der Ansprüche 8 bis 10, wobei das Futter höchstens 20 g Asparaginsäure, höchstens 45 g Glutaminsäure, höchstens 13 g Prolin, höchstens 11 g Serin und/oder Salze davon pro kg Trockenmasse des Futters umfasst.

12. Futter zur Verwendung gemäß einem der Ansprüche 8 bis 11, wobei das Futter von 10 bis höchstens 20 g Asparaginsäure, von 30 bis höchstens 45 g Glutaminsäure, von 5 bis höchstens 13 g Prolin, von 3 bis höchstens 11 g Serin und/oder Salze davon pro kg Trockenmasse des Futters umfasst.

13. Futter zur Verwendung gemäß einem der Ansprüche 8 bis 12, wobei das Futter wenigstens 5 g von jeder der Aminosäuren Arginin, Isoleucin, Lysin, Threonin, Valin und/oder Salze pro kg Trockenmasse des Futters umfasst.

14. Futter zur Verwendung gemäß einem der Ansprüche 8 bis 13, wobei das Futter wenigstens 13 g Arginin, wenigstens 8 g Isoleucin, wenigstens 12 g Lysin, wenigstens 8 g Threonin, wenigstens 9 g Valin und/oder Salze davon pro kg Trockenmasse des Futters umfasst.

## Revendications

1. Aliment pour l'alimentation de volaille comprenant de 60 à moins de 90 g de l'ensemble des acides aminés acide aspartique, acide glutamique, proline, sérine et/ou de sels de ceux-ci, par kg de matière sèche de l'aliment, au moins 5 g de méthionine, d'acide 2-hydroxy-4-(méthylthio)butanoique et/ou d'un sel de ceux-ci par kg de matière sèche de l'aliment et de 160 g ± 10 % à 190 g ± 10 % de protéines brutes par kg de matière sèche de l'aliment.

2. Aliment selon la revendication 1, l'aliment comprenant de 67 g ± 10 % à moins de 80 g ± 10 % de l'ensemble des acides aminés acide aspartique, acide glutamique, proline, sérine et/ou de sels de ceux-ci, par kg de matière sèche de l'aliment.

3. Aliment selon la revendication 1, l'aliment comprenant de 65 à 85 g de l'ensemble des acides aminés acide aspartique, acide glutamique, proline, sérine et/ou de sels de ceux-ci, par kg de matière sèche de l'aliment.

4. Aliment selon l'une quelconque des revendications 1 à 3, l'aliment comprenant 20 g au maximum d'acide aspartique, 45 g au maximum d'acide glutamique, 13 g au maximum de proline, 11 g au maximum de sérine et/ou de sels de ceux-ci, par kg de matière sèche de l'aliment.

5. Aliment selon l'une quelconque des revendications 1 à 4, l'aliment comprenant de 10 à 20 g au maximum d'acide aspartique, de 30 à 45 g au maximum d'acide glutamique, de 5 à 13 g au maximum de proline, de 3 à 11 g au maximum de sérine et/ou de sels de ceux-ci, par kg de matière sèche de l'aliment.

6. Aliment selon l'une quelconque des revendications 1 à 5, l'aliment comprenant au moins 5 g de chacun des acides aminés arginine, isoleucine, lysine, thréonine, valine et/ou de sels de ceux-ci, par kg de matière sèche de l'aliment.

7. Aliment selon l'une quelconque des revendications 1 à 6, l'aliment comprenant au moins 13 g d'arginine, au moins 8 g d'isoleucine, au moins 12 g de lysine, au moins 8 g de thréonine, au moins 9 g de valine et/ou de sels de ceux-ci, par kg de matière sèche de l'aliment.

8. Aliment destiné à être utilisé dans le traitement et/ou la prophylaxie de la campylobactériose chez la volaille, l'aliment comprenant de 60 à moins de 90 g de l'ensemble des acides aminés acide aspartique, acide glutamique, proline, sérine et/ou de sels de ceux-ci par kg de matière sèche de l'aliment, au moins 5 g de méthionine, d'acide 2-hydroxy-4-(méthylthio)butanoïque et/ou d'un sel de ceux-ci par kg de matière sèche de l'aliment et de 160 g ± 10 % à 190 g ± 10 % de protéines brutes par kg de matière sèche de l'aliment.

9. Aliment destiné à être utilisé selon la revendication 8, l'aliment comprenant de 67 g ± 10 % à 80 g ± 10 % de l'ensemble des acides aminés acide aspartique, acide glutamique, proline, sérine et/ou de sels de ceux-ci, par kg de matière sèche de l'aliment.

10. Aliment destiné à être utilisé selon la revendication 8 ou 9, l'aliment comprenant de 65 à 85 g de l'ensemble des acides aminés acide aspartique, acide glutamique, proline, sérine et/ou de sels de ceux-ci, par kg de matière sèche de l'aliment.

11. Aliment destiné à être utilisé selon l'une quelconque des revendications 8 à 10, l'aliment comprenant 20 g au maximum d'acide aspartique, 45 g au maximum d'acide glutamique, 13 g au maximum de proline, 11 g au maximum de sérine et/ou de sels de ceux-ci, par kg de matière sèche de l'aliment.

12. Aliment destiné à être utilisé selon l'une quelconque des revendications 8 à 11, l'aliment comprenant de 10 à 20 g au maximum d'acide aspartique, de 30 à 45 g au maximum d'acide glutamique, de 5 à 13 g au maximum de proline, de 3 à 11 g au maximum de sérine et/ou de sels de ceux-ci, par kg de matière sèche de l'aliment.

13. Aliment destiné à être utilisé selon l'une quelconque des revendications 8 à 12, l'aliment comprenant au moins 5 g de chacun des acides aminés arginine, isoleucine, lysine, thréonine, valine et/ou de sels de ceux-ci, par kg de matière sèche de l'aliment.

14. Aliment destiné à être utilisé selon l'une quelconque des revendications 8 à 13, l'aliment comprenant au moins 13 g d'arginine, au moins 8 g d'isoleucine, au moins 12 g de lysine, au moins 8 g de thréonine, au moins 9 g de valine et/ou de sels de ceux-ci, par kg de matière sèche de l'aliment.
